# EUROPEAN PATENT SPECIFICATION

(11) **EP 2 960 577 B1**
(45) Date of publication and mention of the grant of the patent: **13.06.2018**
(21) Application number: 15749676.1
(22) Date of filing: 05.02.2015
(51) Int. Cl.: F23G 7/06, F23G 5/50, F23G 5/46, F23N 5/00, B67D 7/00

(54) **MARINE BOILER AND METHOD FOR OPERATING MARINE BOILER**
SCHIFFSKESSEL UND VERFAHREN ZUM BETREIBEN DES SCHIFFSKESSELS
CHAUDIÈRE MARINE ET PROCÉDÉ D'ACTIONNEMENT DE CHAUDIÈRE MARINE

(30) Priority: 14.02.2014 JP 2014026680
(43) Date of publication of application: 30.12.2015
(73) Proprietor: Mitsubishi Heavy Industries, Ltd., Tokyo 108-8215 (JP)
(72) Inventor: TERAHARA, Takazumi, Nagasaki-shi Nagasaki 850-8610 (JP)
(74) Representative: Hoffmann Eitle
(86) International application number: PCT/JP2015/053279
(87) International publication number: WO 2015/122356

(56) References cited:
- WO-A1-97/40307
- WO-A1-98/33026
- WO-A1-2013/162965
- WO-A2-2011/007331
- JP-A- S62 157 887
- US-A- 4 036 576
- US-A- 5 215 018
- US-A- 5 427 746
- US-A1- 2012 291 879
- US-B1- 6 655 137

## Description

### Technical Field

The present invention relates to a marine boiler and a method for operating the marine boiler.

### Background Art

In a crude oil tank which is mounted on a ship such as a tanker or Floating Production Storage and Offloading/Floating Storage and Offloading (FPSO/FSO), it is known that gas (hereinafter, referred to as VOC gas) including volatile organic compounds is generated in the inner portion of the crude oil tank.

In the related art, the VOC gas generated inside the crude oil tank is discharged to the atmosphere via a vent. However, since the VOC gas causes air pollution due to suspended particulate matter, photochemical oxidants, or the like, in recent years, a technology which detoxifies the VOC gas without discharging the VOC to the atmosphere is suggested.

WO2011/092450 A discloses a technology, in which VOC gas containing inert gas inside the crude oil tank is supplied to a burner included in a boiler, and the VOC gas is combusted along with a main fuel such as hydrocarbon gas which does not contain VOC gas.

US 5.215.018 A discloses a pollution control apparatus and a method for pollution control by thermally oxidizing a gaseous material, for example VOC gas. The apparatus comprises a combustion zone, which includes a bonus section and a chamber. An additional chamber is located downstream of the chamber and may be considered an extension of the chamber. A VOC-containing air gas feed line is provided to supply the VOC gas to the apparatus, i.e. to the chamber and the additional chamber. A control panel is provided for controlling the apparatus such that in the additional chamber, with the temperature maintained at or above a predetermined minimum value, e.g. at least about 1400 °F (760 °C), and oxygen available, the remaining VOC gas of the original VOC-containing air is effectively thermally oxidized.

### Summary of Invention

### Technical Problem

It is known that volume concentration of VOC gas contained in inert gas inside a crude oil tank varies over a wide range from 100 ppm or less to 50% according to storage conditions of crude oil. When the concentration of the VOC gas is lower than a predetermined concentration (for example, 10 to 20%), since a heating value of the VOC gas is lower, it is not possible to maintain combustion of the burner using only the VOC gas. As described in PTL 1, when the VOC gas of low concentration is combusted along with a sufficient amount of a main fuel, since the combustion is maintained by the main fuel, it is possible to combust and detoxify the VOC gas.

However, in order to reliably combust the VOC gas of low concentration, it is necessary to supply a sufficient amount of main fuel to the burner to maintain the combustion. For example, when a steam output needed in the boiler is small or zero, that is, when a demand for steam is low, the main fuel supplied to the burner may be not necessary or may be a minute amount in order to satisfy the demand. However, in order to reliably combust the VOC gas of low concentration, it is necessary to supply a sufficient amount of main fuel to the burner, and thus, a fuel consumption increases.

The present invention is made in consideration of the above-described circumstances, and an object thereof is to provide a marine boiler capable of reliably performing oxidation treatment on volatile gas containing volatile organic compounds of low concentration while decreasing consumption of a main fuel, and a method for operating the marine boiler.

### Solution to Problem

In order to achieve the above-described object, a marine boiler of the present invention adopts the following means.

According to the present invention, there is provided a marine boiler including a furnace; a burner which combusts a fuel for combustion and a combustion air in the furnace; a volatile gas supply portion which supplies volatile gas containing volatile organic compounds generated in a crude oil tank to the furnace; a discharging portion which discharges combustion gas generated due to combustion by the burner; and a control portion which adjusts an amount of the fuel for combustion applied to the burner and an amount of the combustion air supplied to the burner, and controls an operation to be within a predetermined load range, characterized in that the control portion includes a limited operation mode in which an operation is performed within a limited load range which is limited further than the predetermined load range so that the volatile gas, which flows from the volatile gas supply portion into the furnace and is introduced into the discharging portion, is maintained at a predetermined temperature or more, and stays in the furnace for a predetermined time or more, and in a case where the limited operation mode is set, the control portion determines whether or not a target value of a load is within the limited load range, operates the marine boiler at the target value when the target value is within the limited load range, and operates the marine boiler within the limited load range when the target value is not within the limited load range.

According to the marine boiler of the present invention, the volatile gas containing the volatile organic compounds generated in the crude oil tank is supplied into the furnace which is heated by the combustion of the burner. The control portion, which controls the operation of the marine boiler, adjusts the amount of the fuel for combustion supplied to the burner and the amount of the combustion air supplied to the burner, and operates the marine boiler within a predetermined load range. However, when the marine boiler is operated in a limited operation mode, the marine boiler is operated within a limited load range which is limited further than the predetermined load range. When the control portion operates the marine boiler in the limited operation mode, the volatile gas stays in the furnace during a predetermined time or more, and is maintained at a predetermined temperature or more. By setting the predetermined time and the predetermined temperature to values at which oxidation treatment of the volatile gas is sufficiently performed, even when the volatile gas has extremely low concentration, the volatile gas is discharged from the discharging portion in a state of having been sufficiently subjected to the oxidation treatment.

Accordingly, even when a demand for steam is low, it is possible to supply a marine boiler capable of reliably performing the oxidation treatment on the volatile gas containing volatile organic compounds of low concentration regardless of the concentration (heating value) of the volatile gas while decreasing consumption of the main fuel.

The marine boiler according to a first embodiment further includes an inert gas supply portion which supplies inert gas sealed in the crude oil tank into the furnace, and an adjusting valve which adjusts a flow rate of the inert gas which is supplied to the inert gas supply portion.

Accordingly, a temperature of flame in the furnace is decreased to an appropriate temperature by adjusting a flow rate of the inert gas supplied into the furnace, and thus, it is possible to decrease an amount of nitride oxide (NOx) generated.

The marine boiler according to a second embodiment further includes a detection portion which detects volatile gas which has flowed to the outside, and a shutoff valve which shuts off the supply of the volatile gas from the crude oil tank to the burner when the detection portion detects volatile gas which has flowed to the outside.

Accordingly, when the volatile gas flows to the outside, the outflow of the volatile gas is detected, the supply of the volatile gas from the crude oil tank to the burner is shut off, and it is possible to reliably prevent further volatile gas from flowing to the outside.

According to the present invention, there is also provided a method for operating a marine boiler including a first determining step of determining whether or not a limited operation mode in which an operation is performed within a limited load range is set; a second determining step of determining whether or not a target value of a load is within the limited load range; a first operation step of adjusting amounts of a fuel for combustion and combustion air supplied to a burner by which the fuel for combustion and the combustion air are combusted in a furnace, and performing an operation at the target value of the load when the first determining step determines that the limited operation mode is set and the second determining step determines that the target value of the load is within the limited load range; and a second operation step of performing the operation within the limited load range which is limited further than a predetermined load range so that volatile gas, which contains volatile organic compounds generated in a crude oil tank and flows into the furnace from a volatile gas supply portion which supplies the volatile gas into the furnace, is maintained at a predetermined temperature or more, and stays in the furnace for a predetermined time or more when the first determining step determines that the limited operation mode is set and the second determining step determines that the target value of the load is out of the limited load range.

According to the method for operating a marine boiler of the present invention, the volatile gas containing the volatile organic compounds generated in the crude oil tank is supplied into the furnace which is heated by the combustion of the burner. While the amounts of the fuel for combustion and the combustion air supplied to the burner by which the fuel for combustion and the combustion air are combusted in the furnace are adjusted and the boiler is operated within the predetermined load range in the first operation step, the boiler is operated within the limited load range which is limited further than the predetermined load range in the second operation step. When the second operation step is performed, the volatile gas flowing into the furnace stays in the furnace during the predetermined time or more, and is maintained at the predetermined temperature or more. By setting the predetermined time and the predetermined temperature to values at which oxidation treatment of the volatile gas is sufficiently performed, even when the volatile gas has extremely low concentration, the volatile gas is discharged from the discharging portion in a state of being sufficiently subjected to the oxidation treatment.

Accordingly, even when a demand for steam is low, it is possible to supply the method of operating a marine boiler capable of reliably performing the oxidation treatment on the volatile gas containing volatile organic compounds of low concentration regardless of the concentration (heating value) of the volatile gas while decreasing consumption of the main fuel.

### Advantageous Effects of Invention

According to the present invention, it is possible to provide a marine boiler capable of reliably performing oxidation treatment on volatile gas containing volatile organic compounds of low concentration while decreasing consumption of a main fuel, and a method for operating the marine boiler.

### Brief Description of Drawings

Fig. 1 is a schematic configuration view showing a VOC gas process system including a marine boiler according to an embodiment of the present invention.
Fig. 2 is a sectional view showing the marine boiler according to the embodiment of the present invention.
Fig. 3 is a flowchart showing a driving operation of the marine boiler according to the embodiment of the present invention.
Fig. 4 is a graph showing a residence time in a furnace of a VOC gas and an outlet temperature of the furnace with respect to a load of the boiler with respect to the marine boiler shown in Fig. 1.

### Description of Embodiments

Hereinafter, a VOC gas process system including a marine boiler according to an embodiment of the present invention will be described with reference to the drawings.

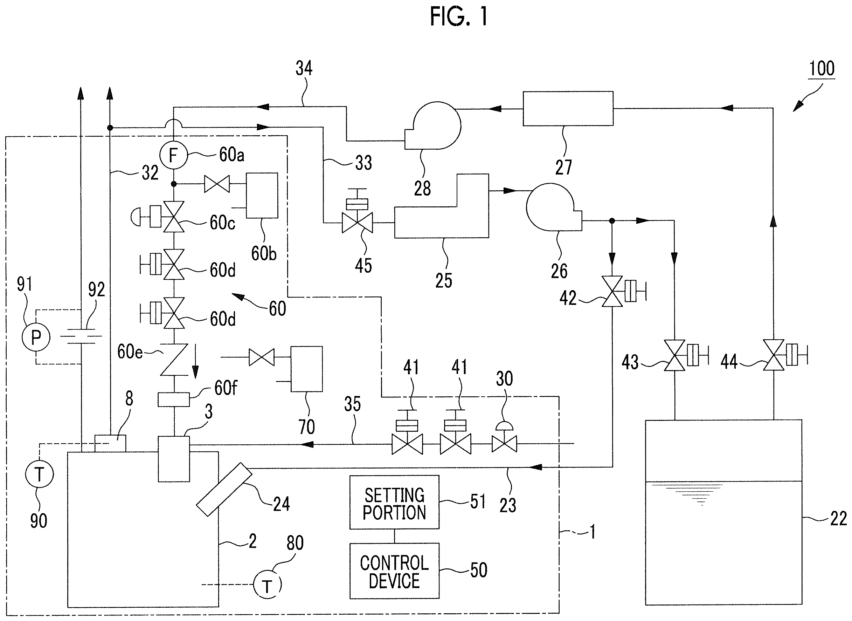

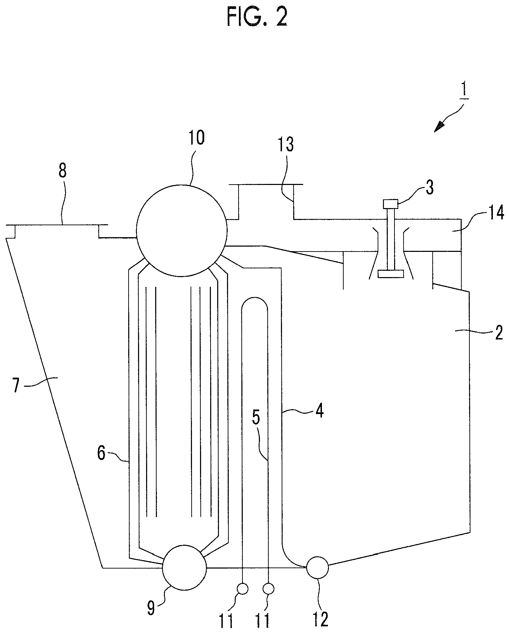

As shown in Figs. 1 and 2, a marine boiler 1 according to the present embodiment included in a VOC gas process system 100 includes a furnace 2, a burner 3, a VOC gas supply portion 60 (volatile gas supply portion), a generating tube bundle 6 (heat exchanger bundle), a flue gas outlet 8 (discharging portion), and a control device 50 (control portion).

As described above, when a concentration of a VOC gas is lower than a predetermined concentration (for example, 10% to 20%), since a heating value of the VOC gas is low, it is not possible to maintain combustion using only the VOC gas. Accordingly, the marine boiler 1 of the present embodiment can operate a VOC processing mode (limited operation mode) for performing oxidation treatment on VOC gas of low concentration. In the VOC processing mode, the control device 50 adjusts an amount of a main fuel of the boiler supplied to the burner 3 so that the VOC gas, which flows from the VOC gas supply portion 60 into the furnace 2 and is introduced into a flue gas outlet 8, is maintained at a predetermined temperature or more (for example, approximately 800°C or more), and stays in the furnace 2 of the marine boiler 1 for a predetermined time or more (for example, approximately 0.5 seconds or more), and operates the marine boiler 1 at a limited load range (for example, approximately 20% to 50%).

In addition, in the present embodiment, combustion performed by the burner 3 is an oxidation phenomenon with a high-speed exothermal reaction. Meanwhile, the VOC processing mode is the oxidation phenomenon without the high-speed exothermal reaction. In the oxidation phenomenon, the oxidation phenomenon in the combustion and the oxidation phenomenon in the VOC processing mode are the same as each other. In the present embodiment, the oxidation phenomenon with the high-speed exothermal reaction is referred to as combustion, and the oxidation phenomenon without the high-speed exothermal reaction is referred to as oxidation treatment.

Hereinafter, each configuration of the marine boiler 1 included in the VOC gas process system 100 will be described.

In the marine boiler 1 shown in Fig. 2, a plurality of burners 3 are installed in a wind box 14 installed on an upper portion of the furnace 2. The burner 3 combusts the main fuel of the boiler (fuel for combustion) supplied via a main fuel line 35, and a fuel gas containing combustion air introduced via an air duct 13 in the furnace 2.

The control device 50 (control portion) which controls the operation of the marine boiler 1 adjusts an amount of the main fuel of the boiler supplied to the burner 3 and an amount of the combustion air supplied to the burner 3, and operates the marine boiler 1 within a predetermined load range. The amount of the combustion air supplied to the burner 3 may be appropriately adjusted according to various parameters. For example, an oxygen concentration contained in exhaust gas discharged from the flue gas outlet 8 may be determined by an oxygen concentration sensor (not shown), and the amount of the combustion air supplied to the burner 3 may be adjusted according to the determined oxygen concentration.

A high-temperature combustion gas generated by the combustion of the fuel gas sequentially passes through a front bank tube 4, a superheater 5, and an evaporator pipe group (rear bank tube) 6 which are disposed downstream of the furnace 2. A heat exchanger bundle including the front bank tube 4, the superheater 5, and the evaporator pipe group 6 is installed so as to face the furnace 2, and a heat exchanger medium such as water circulates through the inner portion of the heat exchanger bundle. The high-temperature combustion gas passes through the heat exchanger bundle, and thus, heat exchange between the high-temperature gas and the heat exchange medium circulating through the inner portion of the heat exchanger bundle is performed. The combustion gas, which has undergone heat-exchange with the heat exchange medium, is discharged from the flue gas outlet 8 to the outside of the marine boiler 1 through an outlet side gas duct 7.

The marine boiler 1 includes a water drum 9 which is provided below the evaporator pipe group 6, a steam drum 10 which is provided above the evaporator pipe group 6, and headers 11 and 12 which are connected to the front bank tube 4. In addition, the marine boiler 1 in the present embodiment is a main boiler which generates steam used for power for propelling a ship. However, the marine boiler 1 may have other embodiments. For example, the marine boiler 1 in the present embodiment may be an auxiliary boiler which generates steam serving as a drive source of a cargo oil pump used for power for cargo handling work of a ship. The steam generated by the auxiliary boiler is supplied to a cargo handling turbine, and rotary power of the cargo handling turbine is accumulated as the drive source of the cargo oil pump. In addition, the marine boiler 1 may be a boiler which is used for other uses such as electricity generation.

As shown in Fig. 1, the marine boiler 1 further includes the control device 50, a fuel control valve 30, and a fuel shutoff valve 41.

The fuel shutoff valve 41 is a valve which is opened and closed by the control device 50, and is open when the main fuel (for example, Heavy Fuel Oil (HFO), Marine Diesel Oil (MDO) (marine diesel oil), methane, or the like) of the boiler is supplied to the marine boiler 1 via the main fuel line 35.

The fuel control valve 30 is a valve in which an opening degree is adjusted by the control device 50, and a flow rate of the main fuel of the boiler which is supplied to the burner 3 is adjusted by the opening degree.

A setting portion 51 receives an instruction from an operator on whether or not the VOC processing mode described below is operated, and sets a set value regarding whether or not the VOC processing mode is operated on the basis of the instruction received from the operator. The set value regarding whether or not the VOC processing mode is operated is notified to the control device 50 by the setting portion 51, and the control device 50 performs control such that the VOC processing mode is operated.

The VOC gas supply portion 60 (volatile gas supply portion) included in the marine boiler 1 includes a flow meter 60a, a gas analyzer 60b, a flow control valve 60c, a shutoff valve 60d, a check valve 60e, and a flame arrestor 60f.

The flow meter 60a is a measuring instrument which measures the flow rate of the VOC gas flowing into the flow meter 60a via a VOC gas line 34, and notifies the measured flow rate to the control device 50.

The gas analyzer 60b is a measuring instrument which measures the concentration of volatile organic compounds included in the VOC gas flowing into the gas analyzer 60b from the VOC gas line 34, or the heating value or the density of the VOC gas, and notifies the measured concentration to the control device 50. As described below, whether or not the VOC processing mode suitable for the oxidation treatment with respect to the VOC gas of low concentration is operated is set by the operator of the marine boiler 1 via the setting portion 51. The gas analyzer 60b notifies the concentration of the volatile organic compounds included in the VOC gas to the control device 50, the control device 50 displays the concentration on a display portion (not shown) or the like, and thus, the operator of the marine boiler 1 can appropriately recognize whether or not the VOC processing mode is to be operated. In addition, it is effective that the VOC processing mode is set when a demand for steam in the ship is low and crude oil is loaded again into a crude oil tank 22 which is substantially empty after crude oil has been unloaded from the crude oil tank 22. This is because, particularly, VOC gas is easily generated when crude oil is loaded into the crude oil tank 22 anew.

The reason why VOC gas is easily generated when crude oil is loaded anew is because the crude oil inside the crude oil tank 22 is easily stirred when crude oil is loaded into a crude oil tank 22 which is substantially empty. When the crude oil inside the crude oil tank 22 is stirred, contact between the crude oil and inert gas around the crude oil is promoted, and thus, VOC gas is easily generated from the crude oil.

The flow control valve 60c is a valve which adjusts the supply amount to the burner 3 of the VOC gas supplied from the VOC gas line 34. The control device 50 adjusts the opening degree of the flow control valve 60c, and thus, can adjust the supply amount of the VOC gas supplied to the burner 3.

The shutoff valve 60d is a valve which is used to switch between whether or not the VOC gas supplied from the VOC gas line 34 is supplied to the burner 3. When a gas detector 70 installed outside a flow path through which the VOC gas circulates detects volatile organic compounds of a predetermined concentration or more, the control device 50 switches the shutoff valve 60d to the shutoff state. Accordingly, when a failure such as leakage of the VOC gas from the flow path occurs, it is possible to prevent the volatile organic compounds from being further leaked. In addition, for example, the gas detector 70 may utilize a detector which detects the concentration of butane which is a main component of the volatile organic compounds.

The marine boiler 1 further includes a temperature detector 80 which measures the temperature inside the furnace 2, and a temperature detector 90 which measures the temperature of the exhaust gas discharged from the flue gas outlet. The temperatures detected by the temperature detector 80 and the temperature detector 90 are notified to the control device 50.

The marine boiler 1 further includes a differential pressure transmitter 91 for measuring the flow rate of the steam which is generated in the steam drum 10 and is introduced into the cargo handling turbine. The differential pressure transmitter 91 is a measuring instrument which measures the flow rate of the steam passing through an orifice 92 by detecting a difference in the pressures (differential pressure) between the upstream pressure and the downstream pressure of the orifice 92. The flow rate of the steam measured by the differential pressure transmitter 91 is notified to the control device 50.

Next, among configurations included in the VOC gas process system 100, configurations other than the marine boiler 1 will be described.

The crude oil tank 22 is a tank in which the crude oil is stored, and inert gas is sealed inside the crude oil tank 22 to prevent ignition of the volatile organic compounds volatilized from the crude oil. For example, the inert gas is inert gas such as CO₂ or N₂. The upper portion of the crude oil tank 22 is filled with the VOC gas in which the volatile organic compounds and the inert gas are mixed with each other. The shutoff valve 44 is opened by the control device 50, and thus, the VOC gas inside the crude oil tank 22 is introduced into a VOC gas filter 27.

The VOC gas filter 27 is a filter for removing soot, water, or the like included in the VOC gas. Soot, water, or the like is removed by the VOC gas filter 27, and thus, foreign matter is not able to be included in the VOC gas circulating to the downstream side.

The VOC gas, in which the foreign matter is removed by the VOC gas filter 27, is introduced into the marine boiler 1 via a VOC gas line 34 by a blower 28.

The VOC gas process system 100 includes an inert gas line 33 through which the inert gas included in the exhaust gas discharged from the flue gas outlet 8 of the marine boiler 1 recirculates. The inert gas line 33 branches from a pathway 32 which extends to a funnel (not shown) discharging the exhaust gas discharged from the marine boiler 1. The exhaust gas flowing in an inert gas line 33 is supplied to the inert gas scrubber 25.

A shutoff valve 45 is provided on the upstream side of an inert gas scrubber 25 on the inert gas line 33. The state of the shutoff valve 45 is adjusted so as to be open or closed according to an instruction from the control device 50. When the shutoff valve 45 is closed, the entire amount of the exhaust gas discharged from the flue gas outlet 8 is discharged to the outside of the VOC gas process system 100 without recirculating.

The inert gas scrubber 25 performs cleaning processing which removes sulfur components or the like from the exhaust gas in which carbon dioxide, nitrogen, soot, NOx, SOx, or the like is included, and cools the exhaust gas by cooling water. The exhaust gas subjected to the cleaning processing becomes the inert gas and is supplied to the blower 26.

The downstream side of the blower 26 branches into a flow path which is connected to the crude oil tank 22 and a flow path 23 connected to a nozzle 24. A flow control valve 42 and a control valve 43 are provided on the flow paths. The control device 50 adjusts the opening degree of each of the flow control valve 42 and the control 43, and thus, in the inert gas discharged from the blower 26, the flow rate of the inert gas introduced into the crude oil tank 22 and the flow rate of the inert gas introduced into the nozzle 24 can be adjusted.

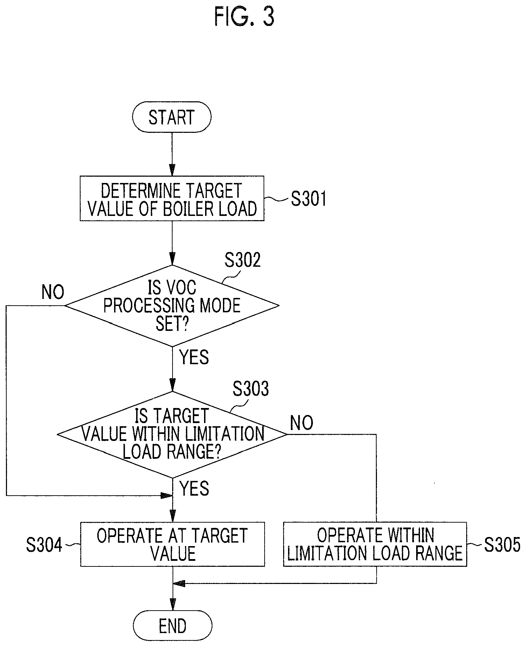

Next, an operation of the marine boiler 1 which is performed by the control device 50 will be described with reference to Fig. 3.

The control device 50 reads a control program from a storage unit (not shown) and executes the control program, and thus, each step shown in Fig. 3 is performed.

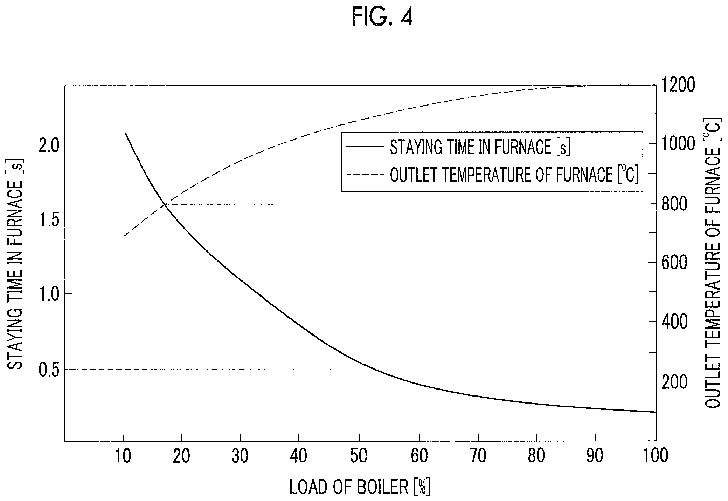

Fig. 3 will be described with reference to Fig. 4. Fig. 4 is a graph showing a residence time in a furnace of the VOC gas and an outlet temperature of the furnace with respect to a load of the boiler with respect to the marine boiler shown in Fig. 1. The residence time in the furnace indicates an elapsed time until the VOC gas flowing into the furnace 2 from the burner 3 reaches the outlet of the furnace (that is, the inlet of the heat exchanger). Moreover, the outlet temperature of the furnace indicates a temperature of the vicinities of the downstream side of the furnace 2 and the upstream side of the heat exchange group.

In the VOC processing mode of the present embodiment, by appropriately managing the residence time in the furnace as described below, the oxidation treatment of the VOC gas is promoted. The reason why the residence time in the furnace indicates the time until the VOC gas reaches to the inlet of the heat exchange group including the front bank tube 4, the superheater 5, and the evaporator pipe group 6 from the burner 3 is because the heat is removed by the heat exchange group in the region in which the heat exchanger bundle is present, and the oxidation treatment of the VOC gas is not likely to be promoted. The oxidation treatment performed in the VOC processing mode of the present embodiment is performed within a region from the inlet of the furnace 2 to the outlet thereof.

In Step S301, the control device 50 determines a target value of the load of the boiler in the marine boiler 1. For example, the load of the boiler is determined by a steam demand of the ship, that is, a demand for steam for driving the cargo oil pump used in the cargo handling work, process steam, or working steam.

In Step S302, the control device 50 determines whether or not the VOC processing mode has been set by the operator of the marine boiler 1 via the setting portion 51. Here, the VOC processing mode (limited operation mode) is an operation mode which is set by the operator when the concentration of the VOC included in the inert gas is a low concentration, and the VOC gas is reliably subjected to the oxidation treatment. For example, when the concentration of the volatile organic compounds measured by the gas analyzer 60b is a low concentration, the operator sets the VOC processing mode via the setting portion 51.

In addition, the setting of the VOC processing mode is performed by the operator. However, the setting may be performed by other aspects. For example, when the concentration of the volatile organic compounds measured by the gas analyzer 60b is a low concentration, the setting portion 51 may automatically set the VOC processing mode.

When it is determined that the VOC processing mode is set in Step S302, the control device 50 allows the processing to proceed to Step S303, and when it is determined that the VOC processing mode is not set, the control device 50 allows the processing to proceed to Step S304.

Here, with reference to Fig. 4, the load of the boiler in the VOC processing mode will be described. As shown in Fig. 4, the residence time in the furnace is decreases as the load of the boiler increases, and the residence time the furnace is increases as the load of the boiler decreases. This is because the flow rates of the main fuel of the boiler and the combustion air increase as the load of the boiler increases, and as a result, the flow velocities of the combustion gas and the VOC gas passing through the furnace 2 of the marine boiler 1 increase.

In addition, as shown in Fig. 4, the outlet temperature of the furnace is increases as the load of the boiler increases, and the outlet temperature of the furnace is decreases as the load of the boiler decreases. This is because the flow rates of the main fuel of the boiler and the combustion air increase as the load of the boiler increases, and as a result, the temperature of the combustion gas generated by the combustion increases.

Moreover, in VOC gas of low concentration, when the residence time in the furnace is approximately 0.5 seconds or more and the outlet temperature of the furnace is approximately 800°C or more, it is known that the oxidation treatment is promoted. The load of the boiler satisfying a condition changes according to characteristics of the boiler or the like. However, in the example of the marine boiler 1 shown in Fig. 4, the load of the boiler is within a range of approximately 20% to 50%.

Accordingly, by limiting the operation of the marine boiler 1 so that the load of the boiler is within a range of approximately 20% to 50%, it is possible to reliably perform the oxidation treatment on VOC gas of low concentration and detoxify the VOC gas. In the example shown in Fig. 4, the range in which the load of the boiler is 20% or more and 50% or less becomes the limited load range to which the VOC processing mode is limited.

In Step S303, the control device 50 determines whether or not the target value determined in Step S301 is within the limited load range, the processing proceeds to Step S304 when the target value is within the limited load range, and the processing proceeds to Step S305 when the target value is not within the limited load range. For example, when the target value determined in Step S301 is 70%, since the limited load range is not within the range of 20% or more and 50% or less, the control device 50 determines NO in Step S303. For example, when the target value determined in Step S301 is 30%, since the limited load range is within the range of 20% or more and 50% or less, the control device 50 determines YES in Step S303.

In Step 304 (first operation step), since the VOC processing mode is not set (NO in Step S302) or the target value is within the limited load range (YES in Step S303), the control device 50 operates the marine boiler 1 at the target value determined in Step S301.

Meanwhile, in Step S305 (second operation step), since the VOC processing mode is set (YES in Step S302) and the target value is out of the limited load range (NO in Step S303), the control device 50 operates the marine boiler 1 within the limited load range. For example, when the target value determined in Step S301 is 70%, the control device 50 controls the marine boiler 1 so that the marine boiler 1 is operated at 50% load of the boiler which is the upper limit of the limited load range. In addition, for example, when the target value determined in Step S301 is 10%, the control device 50 controls the marine boiler 1 so that the marine boiler 1 is operated at 20% load of the boiler which is the lower limit of the limited load range.

By performing Step S304 and Step S305, the operation of the marine boiler 1 shown in Fig. 3 ends and the processing of Step S301 starts again.

As described above, the control device 50 appropriately adjusts the load of the boiler according to whether or not the VOC processing mode is set. When the VOC processing mode suitable for the oxidation treatment of VOC gas of low concentration is set, the control device 50 operates the boiler so that VOC gas of low concentration is subjected to the oxidation treatment so as to be reliably detoxified and the load of the boiler is within the limited load range. Accordingly, the VOC gas of low concentration stays in the furnace 2 for a predetermined time (for example, approximately 0.5 seconds) or more and the temperature in the furnace 2 is a predetermined temperature or more (for example, approximately 800°C) in this case, and thus, the VOC gas is reliably subjected to the oxidation treatment.

When the VOC processing mode is operated and the marine boiler 1 is operated at a higher load than the load required so as to satisfy the demand for the steam in the ship, surplus steam exceeding the demand for the steam in the ship is generated. This surplus steam is introduced into a dump line (surplus steam line) in the ship and is processed.

In addition, when the VOC processing mode is operated and the load is a lower load than the load required to satisfy the demand for the steam in the ship, the control device 50 changes the demand for the steam in the ship so as to require a lower load, and the control device 50 can operate the VOC processing mode. Alternatively, in this case, the control device 50 may control the boiler so that the VOC processing mode is not operated.

Effects of the marine boiler 1 according to the above-described embodiment will be described.

According to the marine boiler 1 of the present embodiment, the VOC gas (volatile gas) including volatile organic compounds generated in the crude oil tank 22 is supplied to the furnace 2 which is heated by the combustion of the fuel gas using the burner 3, passes through the heat exchanger bundle, and thereafter, is discharged from the flue gas outlet 8 (discharging portion). The control device 50 (control portion) which controls the operation of the marine boiler 1 adjusts the amount of the fuel for combustion supplied to the burner 3 and the amount of the combustion air supplied to the burner 3, and operates the marine boiler 1 within the predetermined load range (0 to 100%). However, when the VOC processing mode is operated, the control device 50 operates the marine boiler 1 within the limited load range (for example, 20% or more and 50% or less) which is limited further than the predetermined load range. When the control device 50 performs the VOC processing mode, the VOC gas, which flows into the furnace 2 and is introduced to the outlet of the furnace, stays in the furnace 2 for the predetermined time (for example, approximately 0.5 seconds) or more and is maintained at the predetermined temperature or more (for example, approximately 800°C). By setting the predetermined time and the predetermined temperature to values at which the oxidation treatment of the VOC gas is sufficiently performed, even when the VOC gas has a low concentration at which the combustion is not easily performed, the VOC gas is discharged from the flue gas outlet 8 in the state of being sufficiently subjected to the oxidation treatment in the furnace.

Accordingly, even when the demand for the steam in the ship is low, it is possible to provide the marine boiler 1 capable of reliably performing oxidation treatment on volatile gas containing the volatile organic compounds of low concentration while decreasing the consumption of the main fuel.

The marine boiler 1 of the present embodiment includes the setting portion 51 which set whether or not the VOC processing mode is operated, and when the VOC processing mode is set by the setting portion 51, the control device 50 performs the VOC processing mode. Accordingly, whether or not the VOC processing mode, in which the VOC gas is sufficiently subjected to the oxidation treatment, is operated can be appropriately set according to the instruction of the operator. In addition, alternatively, when the concentration of the volatile organic compounds measured by the gas analyzer 60b is a low concentration, the setting portion 51 can automatically set the VOC processing mode.

The marine boiler 1 of the present embodiment includes the nozzle 24 which supplies the inert gas sealed in the crude oil tank 22 into the furnace 2, and the flow control valve 42 which adjusts the flow rate of the VOC gas supplied to the nozzle 24.

Accordingly, the flow rate of the VOC gas supplied into the furnace 2 is adjusted and the flame temperature in the furnace 2 appropriately decreases, and it is possible to decrease the generated amount of nitride oxide (NOx).

In the marine boiler 1 of the present embodiment, a recirculation line through which the combustion gas discharged from the flue gas outlet 8 is introduced into the adjusting valve, and a scrubber which is provided on the recirculation line may be provided.

Accordingly, the inert gas included in the combustion gas is cooled while harmful materials included in the combustion gas are removed, and it is possible to reuse the inert gas which is introduced into the adjusting valve again.

The marine boiler 1 of the present embodiment includes the gas detector 70 which detects leakage of VOC gas to the outside, and the shutoff valve 60d which shuts off the supply of VOC gas from the crude oil tank 22 to the burner 3 when the leakage of VOC gas to the outside is detected by the gas detector 70.

Accordingly, when VOC gas flows to the outside, the outflow of VOC gas is detected, the supply of VOC gas from the crude oil tank 22 to the burner 3 is shut off, and it is possible to reliably prevent VOC gas from further flowing to the outside.

In the marine boiler 1 of the present embodiment, the VOC gas supply portion 60 supplies VOC gas into the furnace 2 via the burner 3.

Accordingly, when the concentration of the VOC gas is high and the combustion of the fuel gas is performed by the burner 3, it is possible to combust the VOC gas by the burner 3.

### [Other Embodiments]

In the above-described embodiment, the marine boiler 1 includes the temperature detector 80 which measures the temperature in the furnace 2. However, other aspects may be provided. For example, without providing the temperature detector 80 in the marine boiler 1, the temperature in the furnace 2 may be calculated from the load of the marine boiler 1 or the temperature of the exhaust gas detected by the temperature detector 90.

### Reference Signs List

1: marine boiler
2: furnace
3: burner
4: front bank tube (heat exchanger bundle)
5: superheater (heat exchanger bundle)
6: evaporator pipe group (heat exchanger bundle)
8: flue gas outlet (discharging portion)
22: crude oil tank
24: inert gas nozzle (inert gas Supply portion)
33: inert gas line (recirculation line)
42: flow control valve (adjusting valve)
50: control device (control portion)
60: VOC gas supply portion (volatile gas supply portion)
70: gas detector (detection portion)
100: VOC gas process system

## Claims

1. A marine boiler (1), comprising:
a furnace (2);
a burner (3) which combusts a fuel for combustion and a combustion air in the furnace (2);
a volatile gas supply portion (60) which supplies volatile gas containing volatile organic compounds generated in a crude oil tank to the furnace (2);
a discharging portion (8) which discharges combustion gas generated due to combustion by the burner (3); and
a control portion (50) which is configured to adjust an amount of the fuel for combustion supplied to the burner (3) and an amount of the combustion air supplied to the burner (3), and to control an operation to be within a predetermined load range, **characterized in that**
the control portion (50) includes a limited operation mode in which an operation is performed within a limited load range which is limited further than the predetermined load range so that the volatile gas, which flows from the volatile gas supply portion (60) into the furnace (2) and is introduced into the discharging portion (8), is maintained at a predetermined temperature or more, and stays in the furnace (2) for a predetermined time or more, and
in a case where the limited operation mode is set, the control portion (50) determines whether or not a target value of a load is within the limited load range, operates the marine boiler (1) at the target value when the target value is within the limited load range, and operates the marine boiler (1) within the limited load range when the target value is not within the limited load range.

2. The marine boiler (1) according to claim 1, further comprising:
an inert gas supply portion (24) which supplies inert gas sealed in the crude oil tank into the furnace (2); and
an adjusting valve (42) which adjusts a flow rate of the inert gas which is supplied to the inert gas supply portion (24) .

3. The marine boiler (1) according to claim 1 or 2, further comprising:
a detection portion (70) which detects volatile gas which has flowed to the outside; and
a shutoff valve (40) which shuts off the supply of the volatile gas from the crude oil tank to the burner (3) when the detection portion (70) detects volatile gas which has flowed to the outside.

4. A marine boiler (1) according to any one of claims 1 to 3, wherein
the marine boiler (1) is an auxiliary boiler which generates steam used for power for cargo handling work of a ship, and
the limited operation mode is set when the crude oil is loaded into a crude oil tank (22).

5. A method for operating the marine boiler (1) as claimed in any one of claims 1 to 4 the method comprising:
a first determining step (S302) of determining whether or not a limited operation mode in which an operation is performed within a limited load range is set;
a second determining step (S303) of determining whether or not a target value of a load is within the limited load range;
a first operation step (S304) of adjusting amounts of a fuel for combustion and combustion air supplied to a burner (3) by which the fuel for combustion and the combustion air are combusted in a furnace (2), and performing an operation at the target value of the load when the first determining step (S302) determines that the limited operation mode is set and the second determining step (S303) determines that the target value of the load is within the limited load range; and
a second operation step (S305) of performing the operation within the limited load range which is limited further than a predetermined load range so that volatile gas, which contains volatile organic compounds generated in a crude oil tank and flows into the furnace (2) from a volatile gas supply portion (60) which supplies the volatile gas into the furnace (2), is maintained at a predetermined temperature or more, and stays in the furnace for a predetermined time or more when the first determining step (S302) determines that the limited operation mode is set and the second determining step (S303) determines that the target value of the load is out of the limited load range.

## Patentansprüche

1. Schiffskessel (1), umfassend:
einen Ofen (2);
einen Brenner (3), der einen Brennstoff zur Verbrennung und eine Verbrennungsluft in dem Ofen (2) verbrennt;
einen Zufuhrabschnitt (60) für flüchtiges Gas, der flüchtiges Gas, das flüchtige organische Verbindungen enthält, die in einem Rohöltank erzeugt werden, dem Ofen (2) zuführt;
einen Abgabeabschnitt (8), der Verbrennungsgas abgibt, das aufgrund der Verbrennung durch den Brenner (3) erzeugt wird;
und einen Steuerabschnitt (50), der konfiguriert ist, um eine Menge des Brennstoffs, der dem Brenner (3) für die Verbrennung zugeführt wird, und eine Menge der Verbrennungsluft, die dem Brenner (3) zugeführt wird, einzustellen und einen Betrieb zu steuern, um innerhalb eines vorbestimmten Lastbereichs zu liegen, **dadurch gekennzeichnet, dass**
der Steuerabschnitt (50) einen begrenzten Betriebsmodus aufweist, in dem ein Betrieb innerhalb eines begrenzten Lastbereichs durchgeführt wird, der weiter als der vorbestimmte Lastbereich begrenzt ist, so dass das flüchtige Gas, das von dem Zufuhrabschnitt (60) für flüchtiges Gas in den Ofen (2) strömt und in den Abgabeabschnitt (8) eingeleitet wird auf einer vorbestimmten Temperatur oder höher gehalten wird und für eine vorbestimmte Zeit oder länger im Ofen (2) gehalten wird, und dadurch, dass
in einem Fall, in dem der begrenzte Betriebsmodus eingestellt ist, der Steuerabschnitt (50) bestimmt, ob ein Zielwert einer Last innerhalb des begrenzten Lastbereichs liegt oder nicht, und den Schiffskessel (1) bei dem Zielwert betreibt, wenn der Zielwert innerhalb des begrenzten Lastbereichs liegt, und den Schiffskessel (1) innerhalb des begrenzten Lastbereichs betreibt, wenn der Zielwert nicht innerhalb des begrenzten Lastbereichs liegt.

2. Schiffskessel (1) nach Anspruch 1, weiter umfassend:
einen Inertgas-Zufuhrabschnitt (24), der Inertgas, das in dem Rohöltank eingeschlossen ist, dem Ofen (2) zuführt; und
ein Einstellventil (42), das eine Durchflussrate des Inertgases einstellt, das dem Inertgaszufuhrabschnitt (24) zugeführt wird.

3. Schiffskessel (1) nach Anspruch 1 oder 2, weiter umfassend:
einen Erfassungsabschnitt (70), der flüchtiges Gas erfasst, das nach außen geflossen ist; und
ein Absperrventil (40), das die Zufuhr des flüchtigen Gases von dem Rohöltank zu dem Brenner (3) absperrt, wenn der Erfassungsabschnitt (70) flüchtiges Gas erfasst, das nach außen geflossen ist.

4. Schiffskessel (1) nach einem der Ansprüche 1 bis 3, wobei
der Schiffskessel (1) ein Hilfskessel ist, der Dampf erzeugt, der zur Stromversorgung für Frachthandhabungsarbeiten eines Schiffes verwendet wird, und wobei der begrenzte Betriebsmodus eingestellt wird, wenn Rohöl in einen Rohöltank (22) geladen wird.

5. Verfahren zum Betreiben des Schiffskessels (1) nach einem der Ansprüche 1 bis 4, wobei das Verfahren umfasst:
einen ersten Bestimmungsschritt (S302) zum Bestimmen, ob ein begrenzter Betriebsmodus, in dem ein Betrieb innerhalb eines begrenzten Lastbereichs ausgeführt wird, eingestellt ist oder nicht;
einen zweiten Bestimmungsschritt (S303) zum Bestimmen, ob ein Zielwert einer Last innerhalb des begrenzten Lastbereichs liegt oder nicht;
einen ersten Betriebsschritt (S304) des Einstellens von Mengen eines Brennstoffs zur Verbrennung und von Verbrennungsluft, die einem Brenner zugeführt werden (3), durch den der Brennstoff für die Verbrennung und die Verbrennungsluft in einem Ofen (2) verbrannt werden, und Durchführen eines Betriebs an dem Lastzielwert, wenn der erste Bestimmungsschritt (S302) bestimmt, dass der begrenzte Betriebsmodus eingestellt ist, und der zweite Bestimmungsschritt (S303) bestimmt, dass der Lastzielwert innerhalb des begrenzten Lastbereichs liegt; und
einen zweiten Betriebsschritt (S305) zum Durchführen des Betriebs innerhalb des begrenzten Lastbereichs, der weiter als ein vorbestimmter Lastbereich begrenzt ist, so dass flüchtiges Gas, das flüchtige organische Verbindungen enthält, in einem Rohöltank erzeugt wird und in den Ofen (2) aus einem Zufuhrabschnitt (60) für flüssiges Gas strömt, der das flüchtige Gas dem Ofen (2) zuführt, auf einer vorbestimmten Temperatur oder höher gehalten wird und für eine vorbestimmte Zeit oder länger im Ofen verbleibt, wenn der erste Bestimmungsschritt (S302) bestimmt, dass der begrenzte Betriebsmodus eingestellt ist und der zweite Bestimmungsschritt (S303) bestimmt, dass der Lastzielwert außerhalb des begrenzten Lastbereichs liegt.

## Revendications

1. Chaudière maritime (1) comprenant :
un four (2)
un brûleur (3) qui brûle un combustible pour combustion et un air de combustion dans le four (2) ;
une partie d'alimentation de gaz volatil (60) qui fournit un gaz volatil contenant des composés organiques volatils générés dans un réservoir de pétrole brut au four (2) ;
une partie d'évacuation (8) qui décharge le gaz de combustion généré du fait de la combustion par le brûleur (3) ; et
une partie de contrôle (50) qui est configurée pour ajuster une quantité du combustible pour combustion fourni au brûleur (3) et une quantité de l'air de combustion fourni au brûleur (3), et pour contrôler une opération afin qu'elle soit dans une plage de charge prédéterminée, **caractérisée en ce que**
la partie de contrôle (50) inclut un mode de fonctionnement limité dans lequel une opération est réalisée dans une plage de charge limitée, qui est limitée encore davantage que la plage de charge prédéterminée de sorte que le gaz volatil, qui s'écoule depuis la partie d'alimentation en gaz volatil (60) dans le four (2) et est introduit dans la partie d'évacuation (8), est maintenu à une température prédéterminée ou plus, et reste dans le four (2) pour une durée prédéterminée ou plus, et
lorsque le mode de fonctionnement limité est réglé, la partie de contrôle (50) détermine si une valeur cible d'une charge est ou non dans la plage de charge limitée, fait fonctionner la chaudière maritime (1) à la valeur cible quand la valeur cible est dans la plage de charge limitée, et fait fonctionner la chaudière maritime (1) dans la plage de charge limitée quand la valeur cible n'est pas dans la plage de charge limitée.

2. Chaudière maritime (1) selon la revendication 1, comprenant en outre :
une partie d'alimentation en gaz inerte (24) qui fournit un gaz inerte scellé dans le réservoir de pétrole brut dans le four (2) ; et
une soupape de réglage (42) qui ajuste un débit du gaz inerte qui est fourni à la partie d'alimentation de gaz inerte (24).

3. Chaudière maritime (1) selon la revendication 1 ou 2, comprenant en outre :
une partie de détection (70) qui détecte le gaz volatil qui s'est écoulé vers l'extérieur ; et
une soupape d'arrêt (40) qui arrête l'alimentation du gaz volatil depuis le réservoir de pétrole brut au brûleur (3) quand la partie de détection (70) détecte du gaz volatil qui s'est écoulé vers l'extérieur.

4. Chaudière maritime (1) selon l'une quelconque des revendications 1 à 3, dans laquelle
la chaudière maritime (1) est une chaudière auxiliaire qui génère de la vapeur utilisée pour alimenter le travail de manipulation du chargement d'un bateau, et
le mode de fonctionnement limité est réglé quand le pétrole brut est chargé dans un réservoir de pétrole brut (22).

5. Procédé de fonctionnement de la chaudière maritime (1) selon l'une quelconque des revendications 1 à 4, le procédé comprenant :
une première étape de détermination (S302) consistant à déterminer si un mode de fonctionnement limité, dans lequel une opération est réalisée dans une plage de charge limitée, est établi ou non ;
une seconde étape de détermination (S303) consistant à déterminer si une valeur cible d'une charge est dans la plage de charge limitée ou non ;
une première étape de fonctionnement (S304) consistant à ajuster des quantités d'un combustible pour combustion et d'air de combustion fourni à un brûleur (3) par lequel le combustible pour combustion et l'air de combustion sont brûlés dans un four (2), et à réaliser une opération à la valeur cible de la charge quand la première étape de détermination (S302) détermine que le mode de fonctionnement limité est réglé et la seconde étape de détermination (S303) détermine que la valeur cible de la charge est dans la plage de charge limitée ; et
une seconde étape de fonctionnement (S305) consistant à réaliser l'opération dans la plage de charge limitée, qui est limitée encore davantage qu'une plage de charge prédéterminée de sorte qu'un gaz volatil, qui contient des composés organiques volatils générés dans un réservoir de pétrole brut et s'écoule dans le four (2) depuis une partie d'alimentation de gaz volatil (60) qui alimente en gaz volatil le four (2), est maintenu à une température prédéterminée ou plus, et reste dans le four pendant une durée prédéterminée ou plus, quand la première étape de détermination (S302) détermine que le mode de fonctionnement limité est réglé et que la seconde étape de détermination (S303) détermine que la valeur cible de la charge est hors de la plage de charge limitée.
